# EUROPÄISCHE PATENTSCHRIFT

(11) **EP 3 292 805 B1**
(45) Veröffentlichungstag und Bekanntmachung des Hinweises auf die Patenterteilung: **24.11.2021**
(21) Anmeldenummer: 17186256.8
(22) Anmeldetag: 15.08.2017
(51) Int. Cl.: A47J 43/07, A47J 43/16, A47B 91/04, F16M 7/00, A47J 47/16

(54) **KÜCHENMASCHINEN-ERGÄNZUNGSKOMPONENTE MIT EINEM STÜTZFUSS**
KITCHEN APPLIANCE SUPPLEMENTING COMPONENT WITH SUPPORT LEG
COMPOSANTS COMPLÉMENTAIRES D'APPAREILS MÉNAGERS DOTÉS D'UN PIED D'APPUI

(30) Priorität: 26.08.2016 DE 102016216091
(43) Veröffentlichungstag der Anmeldung: 14.03.2018
(73) Patentinhaber: BSH Hausgeräte GmbH, 81739 München (DE)
(72) Erfinder: Ivanusic, Marko, 1000 Ljubljana (SI); Svara, Matej, 6221 Dutovlje (SI); Semeja, Uros, 3327 Smartno ob Paki (SI)

(56) Entgegenhaltungen:
- FR-A1- 2 831 414
- US-A1- 2007 262 213
- US-A1- 2014 238 385

## Beschreibung

Die vorliegende Erfindung betrifft eine Küchenmaschinen-Ergänzungskomponente mit einem Stützfuß.

Küchenmaschinen, wie beispielsweise aus der FR 2 831 414 bekannt sind, bieten in der Regel eine Vielzahl an Funktionalitäten. So können sie beispielsweise zum Häckseln von Gemüse, zum Mahlen von Nüssen, zum Quirlen von Teig, als Saftpresse und/oder als Fleischwolf geeignet sein, um nur einige von vielen Möglichkeiten zu nennen. Für einige ihrer Funktionalitäten können Küchenmaschinen um jeweilige Küchenmaschinen-Ergänzungskomponenten erweiterbar sein, die dann spezifische Elemente aufweisen können, beispielsweise einen besonderen Einfülltrichter, einen eigens ausgebildeten Auffangbehälter und/oder mindestens ein spezielles Zerkleinerungswerkzeug, der/die sich jeweils für die jeweils ergänzte Funktionalität eignet/eignen.

Derartige Ergänzungskomponenten werden im Allgemeinen an mindestens einem vorgesehenen Anschlussbereich der Küchenmaschine befestigt und ggf. mit deren Motor verbunden. Um mechanischen Belastungen bei der Verwendung standzuhalten, müssen die Ergänzungskomponenten in der Regel an einem oder mehreren Punkt/en abgestützt werden. Dazu können die Ergänzungskomponenten mindestens einen integrierten oder separaten, zu befestigenden Stützfuß aufweisen. Eine als Topfauslage ausgebildete Stützvorrichtung ist beispielsweise in der US 2014/0238385 A1 offenbart. US 2007/262213 A1 zeigt ein anderes Beispiel einer Küchenmaschinen-Ergänzungskomponente mit einem Stützfuß.

Da nun der jeweilige Anschlussbereich für die Ergänzungskomponenten je nach Typus der Küchenmaschine an unterschiedlichen Positionen, insbesondere (bei für eine Verwendung vorgesehener Ausrichtung der Küchenmaschine) in unterschiedlichen Höhen über einem Untergrund angeordnet sein kann, muss die Ergänzungskomponente und/oder ihr mindestens einer Stützfuß passend zum Typus der Küchenmaschine bereitgestellt und vom Verwender entsprechend korrekt ausgewählt werden. Dies bedeutet neben einer hohen Fehleranfälligkeit bei der Auswahl durch den Verwender einen erhöhten Herstellungsaufwand, weil die jeweilige Ergänzungskomponenten bzw. Stützfüße passend zu verschiedenen Küchenmaschinentypen gefertigt und entsprechend gekennzeichnet werden müssen. Zudem ist die Ergänzungskomponente mit dem mindestens einen Stützfuß gemäß herkömmlicher Technik nur für den jeweiligen Küchenmaschinentyp geeignet, so dass ein Verwender (beispielsweise bei geändertem Bedarf oder nach einem irreparablen Defekt der Küchenmaschine) nicht auf einen anderen Typ umsteigen kann, ohne auch die Ergänzungskomponente auszutauschen. In Ausführungsvarianten, bei denen der mindestens eine Stützfuß als separates Element an der Ergänzungskomponente anzusetzen ist, kann eine geeignete Länge zudem von der Ergänzungskomponente selbst (nämlich von einer jeweils erforderlichen Stützhöhe, die der Stützfuß erreichen muss) abhängen, so dass für verschiedene Ergänzungskomponenten ggf. verschiedene Stützfüße notwendig sein können.

Die vorliegende Erfindung hat die Aufgabe, eine Technik bereitzustellen, mit der die genannten Nachteile überwunden werden können und die insbesondere eine Einsatzflexibilität für Küchenmaschinenzubehör erhöht.

Die Aufgabe wird durch eine Küchenmaschinen-Ergänzungskomponente mit einem Stützfuß gemäß Anspruch 1. Vorteilhafte Ausführungsformen sind in den Unteransprüchen, der Beschreibung und den Figuren offenbart.

Ein erfindungsgemäßer Stützfuß für eine Küchenmaschinen-Ergänzungskomponente umfasst mindestens zwei miteinander verbundene Elemente. Ein erstes dieser Elemente hat einen Komponentenansatz, der an der Küchenmaschinen-Ergänzungskomponente ansetzt oder dazu eingerichtet ist, an der Küchenmaschinen-Ergänzungskomponente angesetzt (z.B. befestigt) zu werden. Ein zweites der genannten Elemente hat ein Aufsetz-Ende zum Aufsetzen auf einem Untergrund (z.B. einer Tisch- oder Küchenarbeitsplatte). Der Abstand zwischen dem Komponentenansatz und dem Aufsetz-Ende ist dabei (von einem Verwender) verstellbar.

Mit dem Abstand kann also eine Länge des Stützfußes eingestellt werden. So kann der Stützfuß an verschiedene Bedingungen angepasst werden und eignet sich insbesondere zur Verwendung für unterschiedliche Typen von Küchenmaschinen und/oder Küchenmaschinen-Ergänzungskomponenten. Ein erfindungsgemäßer Stützfuß ist somit flexibel einsetzbar, und die Herstellung der Küchenmaschinen-Ergänzungskomponenten ist aufgrund der universellen Verwendbarkeit des Stützfußes vereinfacht.

Das erste Element kann beispielsweise stab-, rohr- oder schienenartig ausgebildet sein, und Analoges gilt für das zweite Element.

Erfindungsgemäß sind die mindestens zwei Elemente teleskopartig miteinander verbunden. Insbesondere ist eine Ausführungsform vorteilhaft, bei der eines der Elemente einen Führungsrahmen ausbildet (beispielsweise eine an mindestens drei Längsseiten geschlossene Schiene oder ein Rohr umfasst), in den ein anderes der Elemente teilweise eingesteckt ist und in veränderlichem Ausmaß herausgezogen bzw. eingeschoben werden kann. Die Elemente können sich so gegenseitig stabilisieren, und der Stützfuß kann besonders leicht hergestellt werden. Vorteilhafterweise weist der Stützfuß dabei eine Blockiereinrichtung auf, die ein Herausziehen über ein maximal vorgesehenes Ausmaß hinaus (und insbesondere ein Lösen einer Verbindung der mindestens zwei Elemente) verhindert.

Erfindungsgemäß hat das zweite Element ein dem Aufsetz-Ende gegenüberliegendes Ende, das vom einem weiteren der Elemente des Stützfußes (beispielsweise vom ersten Element) mindestens teilweise umgriffen wird. Das derart mindestens teilweise umgriffene, dem Aufsetz-Ende gegenüberliegende Ende des zweiten Elements kann dabei vorzugsweise im Inneren des weiteren (insbesondere des ersten Elements) verschoben werden.

Das zweite Element hat bei einer derartigen Ausführungsform somit einen kleineren Querschnitt als das weitere bzw. erste Element, so dass bei einer bestimmungsgemäßen Anordnung bzw. Ausrichtung ein Verschmutzen von oben (in einen Zwischenraum zwischen den beiden Elementen) verhindert wird.

Erfindungsgemäß weist ein erfindungsgemäßer Stützfuß einen Fixiermechanismus zum Fixieren jeweils einer von mindestens zwei verschiedenen wählbaren Stellungen der mindestens zwei Elemente relativ zueinander auf. Der Fixiermechanismus kann beispielsweise einen Rastmechanismus umfassen, der dazu eingerichtet ist, das erste und das zweite Element in verschieden einstellbaren Positionen relativ zueinander zu verrasten, oder der Fixiermechanismus kann eine Klemmvorrichtung umfassen, die dazu eingerichtet ist, das erste und das zweite Element in verschieden einstellbaren Positionen relativ zueinander zu verklemmen.

Der Fixiermechanismus kann eine Verriegelung umfassen, die vorzugsweise mindestens teilweise im Innern mindestens eines der Elemente angeordnet ist. Vorteilhaft ist eine Ausführungsvariante, bei welcher der Fixiermechanismus über mindestens ein Bedienelement, beispielsweise wenigstens einen Knopf zu bedienen ist. Die Fixierung kann beispielsweise durch eine Feder zu bewirken und durch Druck auf ein derartiges Bedienelement (der Federkraft entgegen) zu lösen sein.

Auf diese Weise kann der Stützfuß in einer passend gewählten Länge (also mit einem gewählten Abstand von Komponentenansatz und Aufsetz-Ende voneinander) fixiert werden und fortan (bis zu einer erneuten Verstellung) dazu verwendet werden, die Küchenmaschinen-Ergänzungskomponente abzustützen.

Erfindungsgemäß ist der Abstand zwischen dem Komponentenansatz und dem Aufsetz-Ende mindestens innerhalb eines Bereichs kontinuierlich verstellbar. Mindestens zwei der Elemente können beispielsweise mittels einer Verschraubung miteinander verbunden sein, insbesondere kann eines der Elemente einen Schraubbolzen umfassen und ein anderes ein passendes Gewinde, in das der Schraubbolzen verstellbar weit eingeschraubt werden kann.

Ein Stützfuß einer derartigen Ausführungsform ist besonders flexibel verwendbar. Insbesondere eignet er sich auch zu Anpassung an einen unebenen Untergrund und/oder zur Verwendung mit einer Küchenmaschine (bzw. einer Küchenmaschinen-Ergänzungskomponente) mit nicht vorab bekannten Abmessungen (beispielsweise einer Küchenmaschine eines erst später entwickelten Typs).

Gemäß einer vorteilhaften Ausführungsform eines erfindungsgemäßen Stützfußes ist das erste Element mit mindestens einem Gehäuseteil der Küchenmaschinen-Ergänzungskomponente monolithisch ausgebildet, also an das Gehäuseteil (das auch das gesamte Gehäuse sein kann) angeformt; besonders vorteilhaft ist eine Ausführungsform, bei der Gehäuseteil und erstes Element mindestens teilweise in einem Spritzgussverfahren aus Kunststoff hergestellt sind. Am Komponentenansatz geht dabei also der Stützfuß in das Gehäuseteil über.

Bei einer derartigen Ausführungsform ist die Verbindung zwischen Küchenmaschinen-Ergänzungskomponente und Stützfuß besonders solide. Da hierfür zudem kein Verbindungsmechanismus benötigt wird, ist die Herstellung der Küchenmaschinen-Ergänzungskomponente und des Stützfußes vereinfacht.

Gemäß einer alternativen vorteilhaften Ausführungsform ist ein erfindungsgemäßer Stützfuß als separates oder von der Küchenmaschinen-Ergänzungskomponente loszulösendes Einzelteil ausgebildet. Dabei weist der Stützfuß an seinem Komponentenansatz vorzugsweise eine Auflagefläche auf (auf der die Küchenmaschinen-Ergänzungskomponente zur Auflage gebracht werden kann und die vorzugsweise Form hat, die an einen Aufliegebereich eines Gehäuseteils der Küchenmaschinen-Ergänzungskomponente angepasst ist), und/oder ein Befestigungsmittel zur Befestigung des Stützfußes an einem Gehäuseteil der Küchenmaschinen-Ergänzungskomponente. Ein derartiges Befestigungsmittel kann z.B. eine Schraubvorrichtung und/oder eine Halteschiene und/oder eine Einrastvorrichtung umfassen.

Ein derartiger Stützfuß ist besonders variabel einsetzbar und kann insbesondere für verschiedene Küchenmaschinen-Ergänzungskomponenten alternativ verwendet werden.

Erfindungsgemäß umfasst ein erfindungsgemäßer Stützfuß einen Federmechanismus, der dazu eingerichtet ist, den Komponentenansatz und das Aufsetz-Ende auseinander zu drücken. Auf diese Weise kann das Aufsetz-Ende mittels des Federmechanismus' bis zu seinem Aufsetzen auf dem Untergrund vom Komponentenansatz weg getrieben werden; in der damit erreichten Länge kann der Stützfuß vorzugsweise festgestellt werden.

Dies ermöglicht ein besonders einfaches und präzises, bedarfsgerechtes Auseinandertreiben des Stützfußes, weil die Küchenmaschinen-Ergänzungskomponente dabei bereits in der vorgesehenen Position gehalten werden kann und sich eine benötigte Länge des Stützfußes mittels der Feder automatisch einstellt.

Der Federmechanismus kann beispielsweise mittels eines Bedienelements am Stützfuß aktivierbar und/oder deaktivierbar sein.

Der Abstand zwischen dem Komponentenansatz und dem Aufsetz-Ende ist vorzugsweise um mindestens 2cm, bevorzugter mindestens 3cm verstellbar, der Unterschied zwischen einer maximal möglichen und einer minimal möglichen Länge des Stützfußes beträgt also vorzugsweise wenigstens 2cm, bevorzugter wenigstens 3cm. Anders formuliert ist die Länge des Stützfußes somit vorzugsweise um mindestens 2cm, bevorzugter mindestens 3cm variierbar. Dies gewährleistet eine flexible Verwendbarkeit des Stützfußes.

Eine erfindungsgemäße Küchenmaschinen-Ergänzungskomponente umfasst einen erfindungsgemäßen Stützfuß gemäß einer der in dieser Schrift offenbarten Ausführungsformen. Der Stützfuß kann dabei als separates Bauteil an der Küchenmaschinen-Ergänzungskomponente (vorzugsweise lösbar) befestigt oder einteilig mit mindestens einem Gehäuseteil der Küchenmaschinen-Ergänzungskomponente geformt sein.

Im Folgenden werden bevorzugte Ausführungsbeispiele der Erfindung anhand von Zeichnungen näher erläutert. Es versteht sich, dass einzelne Elemente und Komponenten auch anders kombiniert werden können als dargestellt. Bezugszeichen für einander entsprechende Elemente sind figurenübergreifend verwendet und werden ggf. nicht für jede Figur neu beschrieben.

Es zeigen schematisch:
- Figur 1:: zwei Küchenmaschinen verschiedener Typen mit jeweils durch einen erfindungsgemäßen Stützfuß abgestützter Küchenmaschinen-Ergänzungskomponente;
- Figur 2:: einen Aufbau eines erfindungsgemäßen Stützfußes gemäß einer exemplarischen Ausführungsform der vorliegenden Erfindung im Querschnitt; und
- Figur 3:: einen erfindungsgemäßen Stützfuß gemäß einer alternativen exemplarischen Ausführungsform der vorliegenden Erfindung in perspektivischer Ansicht.

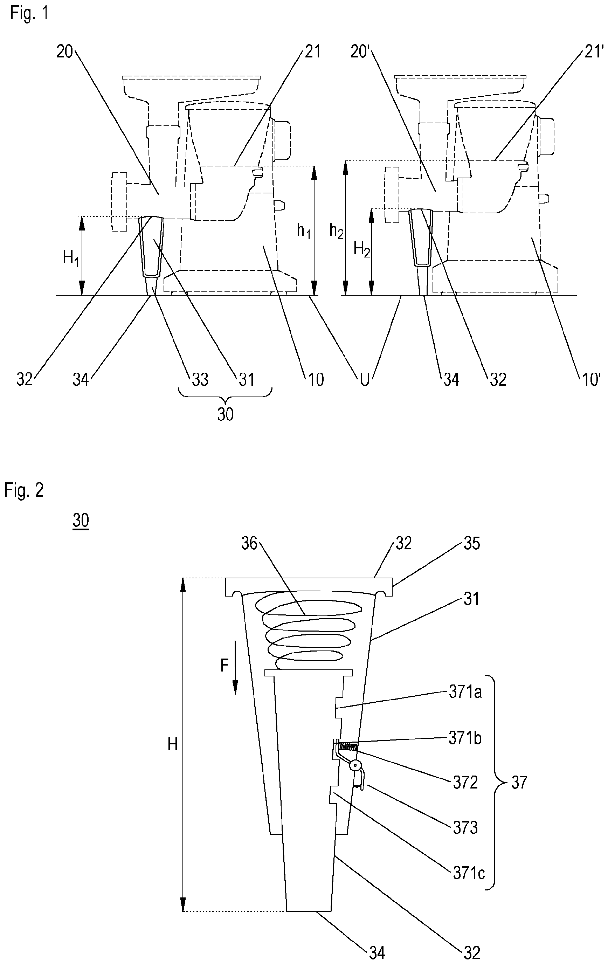

In Figur 1 sind schematisch zwei Küchenmaschinen 10, 10' unterschiedlicher Typen zum Vergleich in einer bestimmungsgemäßen Ausrichtung auf einem Untergrund U stehend dargestellt. An einem jeweiligen Anschlussbereich 21 bzw. 21' der Küchenmaschinen 10 bzw. 10' ist jeweils die gleiche Küchenmaschinen-Ergänzungskomponente 20 befestigt.

Die Küchenmaschinen 10 und 10' unterscheiden sich in dem Abstand h₁ bzw. h₂ ihres jeweiligen Anschlussbereichs 21 bzw. 21' vom Untergrund U. Dadurch wird die Küchenmaschinen-Ergänzungskomponente 20 an den beiden Küchenmaschinen in unterschiedlichen Positionen relativ zum Untergrund gehalten, wo sie jeweils durch den gleichen erfindungsgemäßen Stützfuß 30 abgestützt werden.

Der Stützfuß 30 umfasst ein erstes Element 31 und ein zweites Element 33, die miteinander verbunden sind. Das erste Element 31 umfasst einen Komponentenansatz 32, an dem es an der Küchenmaschinen-Ergänzungskomponente 20 ansetzt. Dieser Komponentenansatz kann dabei in einem kontinuierlichen Materialübergang ausgebildet sein, so dass also ein Gehäuseteil der Küchenmaschinen-Ergänzungskomponente 20 monolithisch mit dem ersten Element 31 ausgebildet ist, oder das erste Element kann als separates Bauteil (und vorzugsweise lösbar) an der Küchenmaschinen-Ergänzungskomponente 20 angesetzt, vorzugsweise befestigt worden sein.

Das zweite Element 33 setzt mit einem Aufsetz-Ende 34 auf dem Untergrund U auf. Der Abstand zwischen dem Komponentenansatz 32 und dem Aufsetz-Ende 34 ist dabei erfindungsgemäß verstellbar; wie sich aus der Darstellung der Küchenmaschinen 10 und 10' im Vergleich ergibt, wurde zum Abstützen der an der Küchenmaschine 10 befestigten Küchenmaschinen-Ergänzungskomponente 20 ein Abstand H₁ eingestellt, wohingegen zum Abstützen der an der Küchenmaschine 10' befestigten Küchenmaschinen-Ergänzungskomponente 20 ein Abstand H₂ eingestellt wurde. Aufgrund der Verstellbarkeit des Abstandes und damit der Länge des Stützfußes 30 kann für beide Küchenmaschinen 10 und 10' der gleiche Stützfuß verwendet werden.

Eine einstellbare Abstandsdifferenz beträgt vorzugsweise mindestens 2cm, bevorzugter mindestens 3cm.

In Figur 2 ist ― stark vereinfacht ― ein Aufbau eines erfindungsgemäßen Stützfußes 30 gemäß einer exemplarischen Ausführungsform der vorliegenden Erfindung im Querschnitt dargestellt. Der Stützfuß 30 ist als ein separates Bauteil mit einem ersten Element 31 und einem zweiten Element 33 ausgebildet. Das erste Element 31 weist an einem Komponentenansatz 32 ein Befestigungsmittel 35 auf, das dazu eingerichtet ist, zur Befestigung des Stützfußes mit einem geeigneten Gegenelement einer Küchenmaschinen-Ergänzungskomponente verbunden zu werden.

Wie zu sehen ist, umgreift das erste Element 31 das zweite Element 33 teilweise; innerhalb des ersten Elements 31 ist damit das zweite Element 33 verschieblich, so dass ein Abstand H des Komponentenansatz von einem Aufsetz-Ende 34 des Stützfußes veränderlich ist.

Dabei umfasst der gezeigte Stützfuß einen Federmechanismus 36 mit einer Feder, die mit einer Federkraft F das zweite Element vom Komponentenansatz 32 wegdrückt und so darauf hinwirkt, den Abstand H zu vergrößern.

Der Federkraft entgegen wirkt ein Fixiermechanismus 37, der vorliegend als Rastmechanismus ausgebildet ist und ein Bedienelement 373 umfasst, das im gezeigten Beispiel als ein Hebel geformt ist. Dessen innerhalb des ersten Elements 31 liegendes Ende greift in eine Vertiefung 371b ein und verhindert so ein Verstellen des Abstandes H. Das zweite Element 33 ist daher in der gezeigten Stellung relativ zum ersten Element 31 verrastet.

Der Rastmechanismus 37 umfasst weiterhin eine Feder 372, die das besagte Ende des Bedienelements in der Vertiefung 371a hält. Wird nun das Bedienelement entgegen der Kraft der Feder 372 betätigt, so wird die Verrastung gelöst, das zweite Element 33 kann relativ zum ersten Element 31 in diesem verschoben und der Abstand H von Komponentenansatz 32 und Aufsetz-Ende 34 damit verstellt werden. Erfolgt dabei ein die Federkraft F übersteigender Gegendruck durch Aufsetzen des Aufsetz-Endes 34 auf einen (nicht gezeigten) Untergrund, wird das zweite Element 33 weiter in das erste Element 31 hineingedrückt und der Abstand H verkürzt, beispielsweise bis das im Innern des ersten Elements 31 angeordnete Ende des Bedienelements 373 in der Vertiefung 371c einrastet (sofern das Bedienelement losgelassen wird).

Erfolgt kein derartiges Aufsetzen auf den Untergrund, treibt der Federmechanismus 36 das zweite Element 33 weiter aus dem ersten Element 31 heraus, so dass der Abstand H vergrößert wird, beispielsweise bis das im Innern des ersten Elements 31 angeordnete Ende des Bedienelements 373 in der Vertiefung 371a einrastet (wiederum sofern das Bedienelement losgelassen wird).

Alternativ zu einem Federmechanismus 36, wie er in der Figur 2 gezeigt ist, kann ein manuelles Verstellen der Höhe H vorgesehen sein, bei dem also das zweite Element 33 aus dem ersten Element weiter herausgezogen oder in das erste Element hineingedrückt wird.

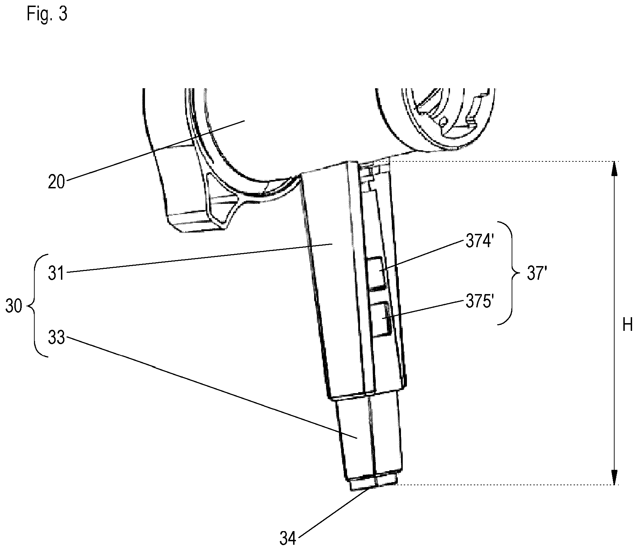

In Figur 3 ist in perspektivischer Ansicht ein Stützfuß 30' gemäß einer alternativen Ausführungsform der vorliegenden Erfindung dargestellt. Der Stützfuß 30' ist dabei einteilig an ein Gehäuseteil einer Küchenmaschinen-Ergänzungskomponente 20 angeformt, beispielsweise mittels eines Spritzgussverfahrens; Gehäuseteil und das erste Element 31 des Stützfußes sind in diesem Falle vorzugsweise mindestens teilweise aus Kunststoff. Der Komponentenansatz 32 ist dabei in einem kontinuierliche Materialübergang zwischen Gehäuseteil und erstem Element 31 ausgebildet.

Wie auch beim in der Figur 2 gezeigten Ausführungsbeispiel sind das erste Element 31 und das zweite Element 33 teleskopartig miteinander verbunden, im vorliegenden Fall kann das zweite Element aus dem ersten teilweise herausgezogen bzw. in das erste Element hineingeschoben werden. Alternativ könnten das erste und das zweite Element beispielsweise veränderlich gegeneinander abgewinkelt werden, z.B. entsprechend einem Zollstockprinzip.

Der Stützfuß 30' weist ferner ein Fixiermechanismus 37' auf, der zwei Knöpfe 374' und 375' umfasst, mit denen ein (nicht gezeigter) Fixiermechanismus zum Fixieren der Position von erstem und zweitem Element relativ zueinander gelöst bzw. aktiviert werden kann.

Ein erfindungsgemäßer Stützfuß 30, 30' für eine Küchenmaschinen-Ergänzungskomponente 20 umfasst mindestens zwei miteinander verbundene Elemente. Ein erstes der Elemente 31 hat einen Komponentenansatz 32, der an der Küchenmaschinen-Ergänzungskomponente 20 ansetzt oder dazu eingerichtet ist, an der Küchenmaschinen-Ergänzungskomponente befestigt zu werden. Ein zweites der Elemente 33 hat ein Aufsetz-Ende 34 zum Aufsetzen auf einem Untergrund U. Der Abstand H, H₁, H₂ zwischen dem Komponentenansatz 32 und dem Aufsetz-Ende 34 ist verstellbar.

Eine erfindungsgemäße Küchenmaschinen-Ergänzungskomponente 20 umfasst einen erfindungsgemäßen Stützfuß 30, 30'.

**Bezugszeichen**
- 10, 10': Küchenmaschine

- 20, 20': Küchenmaschinen-Ergänzungskomponente
- 21, 21': Anschlussbereich

- 30, 30': Stützfuß
- 31: erstes Element
- 32: Komponentenansatz
- 33: zweites Element
- 34: Aufsetz-Ende
- 35: Befestigungsmittel
- 36: Federmechanismus
- 37, 37': Fixiermechanismus
- 371a, 371b, 371c: Vertiefung
- 372: Feder
- 373: Bedienelement
- 374', 375': Knopf

- F: Federkraft
- h₁, h₂: Abstand Anschlussbereich 21 bzw. 21' und Untergrund U
- H, H₁, H₂: Abstand zwischen dem Komponentenansatz 32 und dem Aufsetz-Ende 34

- U: Untergrund

## Patentansprüche

1. Küchenmaschinen-Ergänzungskomponente (20) mit einem Stützfuß (30, 30'), der mindestens zwei miteinander verbundene Elemente umfasst, wobei ein erstes der Elemente (31) einen Komponentenansatz (32) hat, der an der Küchenmaschinen-Ergänzungskomponente (20) ansetzt oder dazu eingerichtet ist, an der Küchenmaschinen-Ergänzungskomponente (20) angesetzt zu werden, und wobei ein zweites der Elemente (33) ein Aufsetz-Ende (34) zum Aufsetzen auf einem Untergrund (U) hat, wobei der Abstand (H, H₁, H₂) zwischen dem Komponentenansatz (32) und dem Aufsetz-Ende (34) verstellbar ist, wobei der Stützfuß (30, 30') weiter einen Fixiermechanismus (37, 37') zum Fixieren mindestens zweier verschiedener wählbarer Stellungen der mindestens zwei Elemente (31, 33) relativ zueinander umfasst, dergestalt, dass der Abstand (H, H₁, H₂) mindestens innerhalb eines Bereichs kontinuierlich verstellbar ist, wobei der Stützfuß weiter einen Federmechanismus (36) umfasst, der dazu eingerichtet ist, den Komponentenansatz (32) und das Aufsetz-Ende (34) auseinander zu drücken, **dadurch gekennzeichnet, dass** die mindestens zwei Elemente teleskopartig miteinander verbunden sind.

2. Küchenmaschinen-Ergänzungskomponente (20) gemäß einem der vorhergehenden Ansprüche, wobei das erste Element (31) mit mindestens einem Gehäuseteil der Küchenmaschinen-Ergänzungskomponente (20) monolithisch ausgebildet ist.

3. Küchenmaschinen-Ergänzungskomponente (20)gemäß einem der Ansprüche 1 bis 2, wobei der Stützfuß als separates oder von der Küchenmaschinen-Ergänzungskomponente (20) loszulösendes Einzelteil ausgebildet ist,
wobei am Komponentenansatz (32) ein Befestigungsmittel (35) zur Befestigung des Stützfußes an einem Gehäuseteil der Küchenmaschinen-Ergänzungskomponente angeordnet ist.

4. Küchenmaschinen-Ergänzungskomponente (20)gemäß einem der vorhergehenden Ansprüche, wobei der Abstand (H, H₁, H₂) um mindestens 2cm, bevorzugter mindestens 3cm verstellbar ist.

## Claims

1. Kitchen appliance supplementing component (20) with a support leg (30, 30'), which comprises at least two elements connected to one another,
wherein a first of the elements (31) has a component attachment (32), which attaches to the kitchen appliance supplementing component (2) or is designed to be attached to the kitchen appliance supplementing component (20) and wherein a second of the elements (33) has an attachment end (34) for attachment to a base (U),
wherein the distance (H, H₁, H₂) between the component attachment (32) and the attachment end (34) can be adjusted, wherein the support leg (30, 30') further comprises a fixing mechanism (37, 37') for fixing at least two different selectable positions of the at least two elements (31, 33) relative to one another, so that the distance (H, H₁, H₂) can be adjusted continuously at least within a range, wherein the support leg further comprises a spring mechanism (36) which is designed to push the component attachment (32) and the attachment end (34) apart, **characterised in that** the at least two elements are connected telescopically to one another.

2. Kitchen appliance supplementing component (20) according to one of the preceding claims, wherein the first element (31) is embodied monolithically with at least one housing part of the kitchen appliance supplementing component (20).

3. Kitchen appliance supplementing component (20) according to one of claims 1 to 2, wherein the support leg is embodied as an individual part which is separate or can be released from the kitchen appliance supplementing component (20), wherein a fastening means (35) for fastening the support leg to a housing part of the kitchen appliance supplementing component is arranged on the component attachment (32).

4. Kitchen appliance supplementing component (20) according to one of the preceding claims, wherein the distance (H, H₁, H₂) can be adjusted by at least 2 cm, preferably at least 3 cm.

## Revendications

1. Composant complémentaire d'appareils de cuisine (20) avec un pied d'appui (30, 30'), qui comprend au moins deux éléments reliés l'un à l'autre, dans lequel un premier parmi les éléments (31) possède un épaulement de composant (32), qui s'applique au composant complémentaire d'appareils de cuisine (20) ou est aménagé afin d'être appliqué sur le composant complémentaire d'appareils de cuisine (20), et dans lequel un deuxième parmi les éléments (33) possède une extrémité de pose (34) pour la pose sur un support (U), dans lequel l'écartement (H, H₁, H₂) entre l'épaulement de composant (32) et l'extrémité de pose (34) est réglable, dans lequel le pied d'appui (30, 30') comprend en outre un mécanisme de fixation (37, 37') pour la fixation d'au moins deux positions sélectionnables différentes des au moins deux éléments (31, 33) l'un par rapport à l'autre, de telle sorte que l'écartement (H, H₁, H₂) est réglable en continu au moins à l'intérieur d'une zone, dans lequel le pied d'appui comprend en outre un mécanisme à ressort (36), aménagé afin de pousser l'épaulement de composant (32) et l'extrémité de pose (34) à l'écart l'un de l'autre, **caractérisé en ce que** les au moins deux éléments sont reliés l'un à l'autre de façon télescopique.

2. Composant complémentaire d'appareils de cuisine (20) selon l'une des revendications précédentes, dans lequel le premier élément (31) est formé de façon monolithique avec au moins une partie de carcasse du composant complémentaire d'appareils de cuisine (20).

3. Composant complémentaire d'appareils de cuisine (20) selon l'une des revendications 1 à 2, dans lequel le pied d'appui est formé sous la forme d'une pièce individuelle distincte ou amovible du composant complémentaire d'appareils de cuisine (20), dans lequel un moyen de fixation (35) pour la fixation du pied d'appui à une partie de carcasse du composant complémentaire d'appareils de cuisine est disposé sur l'épaulement de composant (32).

4. Composant complémentaire d'appareils de cuisine (20) selon l'une des revendications précédentes, dans lequel l'écartement (H, H₁, H₂) est réglable sur au moins 2 cm, de préférence au moins 3 cm.
